# EUROPEAN PATENT APPLICATION

(11) **EP 4 691 246 A1**
(43) Date of publication of application: **11.02.2026**
(21) Application number: 24780892.6
(22) Date of filing: 29.03.2024
(51) Int. Cl.: A23D 7/00, A23J 3/00, A23L 13/00

(54) **WATER-IN-OIL EMULSION COMPOSITION FOR MEAT-SUBSTITUTE PROCESSED PRODUCT CONTAINING PLANT RAW MATERIAL**

(30) Priority: 31.03.2023 JP 2023058222
(71) Applicant: Mitsubishi Chemical Corporation, Tokyo 100-8251 (JP)
(72) Inventor: NAITO Eriko, Tokyo 100-8251 (JP); ARIMA Satoshi, Tokyo 100-8251 (JP)
(74) Representative: Vossius & Partner Patentanwälte Rechtsanwälte mbB
(86) International application number: PCT/JP2024/013256
(87) International publication number: WO 2024/204798

(57) **Abstract**

The present invention is directed to providing a new composition that enables imparting binding properties and juiciness to a meat substitute processed product comprising plant raw material. The present invention provides a water-in-oil emulsion composition for use in a meat substitute processed product comprising plant raw material, comprising an emulsifier A, and an emulsifier B and/or an emulsifier C, wherein the emulsifier A is one or more emulsifiers selected from the group consisting of polyglycerin-condensed ricinoleic acid ester, glycerin fatty acid ester, sucrose fatty acid ester, and lecithin, the emulsifier A has an HLB of 9.0 or less; and the emulsifier B is fatty acid ester and has saturated fatty acid as constituent fatty acid, and the emulsifier C is fatty acid ester and has only unsaturated fatty acid as constituent fatty acid.

## Description

### Technical Field

The present invention relates to a water-in-oil emulsion composition for a meat substitute processed product comprising plant raw material and a meat substitute processed product comprising plant raw material and the composition.

### Background Art

Meat substitutes produced from vegetable proteins derived from various plants such as soybeans or peas as raw material have been recently developed and attracted attention instead of animal meats such as pork, beef, and chicken from various viewpoints of environmental problems, animal welfare, and health consciousness.

Unfortunately, such meat substitutes are lacking in binding properties before and after heating due to characteristics of vegetable proteins to be less sticky and crumbly after the molding.

Liquids such as water and oil and fat containing umami ooze out of processed products of animal meat during eating to yield juiciness (also referred to as a "juicy feeling"). Unfortunately, it is difficult to yield such juiciness from processed products of meat substitutes.

Accordingly, it has been attempted to improve the binding properties or the juiciness of meat substitutes.

Patent Literature 1 discloses a modifying agent for a vegetable protein composition, comprising an oil-in-water emulsion comprising edible oil and fat at 3 to 40% by mass and vegetable protein, wherein the viscosity at 20°C is 15 to 300 mPa•s. Patent Literature 1 states that a dried vegetable protein composition can be immersed in a solution containing this modifying agent to be tenderized and modified, resulting in improvement in the binding properties thereof.

Patent Literature 2 discloses an oil and fat composition for producing a water-in-oil emulsion for a plant raw material-containing meat substitute processed food, comprising edible oil and fat and polyglycerin-condensed ricinoleic acid ester, wherein the viscosities at temperatures of 10°C and 35°C are 400 to 100000 mPa•s. Patent Literature 2 states that the oil and fat composition can be added to a plant raw material-containing meat substitute processed food to yield a plant raw material-containing meat substitute processed food having a very juicy feeling and an excellent flavor.

However, new means that enables imparting binding properties and juiciness to a meat substitute processed product comprising plant raw material has been earnestly desired in the field concerned.

### Citation List

### Patent Literature

Patent Literature 1: Japanese Patent Laid-Open No. 2023-8091
Patent Literature 2: Japanese Patent Laid-Open No. 2022-88239

### Summary of Invention

### Technical Problem

The present invention is directed to providing new means that enables imparting binding properties and juiciness to a meat substitute processed product comprising plant raw material.

### Solution to Problem

The present inventors have conducted extensive investigations to address the above-mentioned issue. As a result, they discovered that, by employing a water-in-oil emulsion composition containing at least two specific emulsifiers enables improving the binding properties of a meat substitute comprising plant raw material and imparting juiciness to a processed product of the water-in-oil emulsion composition.

The present invention has been completed based on such new findings, and includes the following inventions.
[1] A water-in-oil emulsion composition for use in a meat substitute processed product comprising plant raw material, comprising:
   an emulsifier A and
   an emulsifier B and/or an emulsifier C,
   wherein the emulsifier A is one or more emulsifiers selected from the group consisting of polyglycerin-condensed ricinoleic acid ester, glycerin fatty acid ester, sucrose fatty acid ester, and lecithin, the emulsifier A has an HLB of 9.0 or less,
   the emulsifier B is fatty acid ester and has saturated fatty acid as constituent fatty acid, and
   the emulsifier C is fatty acid ester and has only unsaturated fatty acid as constituent fatty acid.
[2] The water-in-oil emulsion composition of [1], wherein the emulsifier A is polyglycerin-condensed ricinoleic acid ester and/or lecithin.
[3] The water-in-oil emulsion composition of [1] or [2], wherein each of the emulsifier B and the emulsifier C is one or more emulsifiers selected from the group consisting of glycerin fatty acid ester, polyglycerin fatty acid ester, sucrose fatty acid ester, sorbitan fatty acid ester, propylene glycol fatty acid ester, organic acid monoglyceride, and polyoxyethylene sorbitan fatty acid ester.
[4] The water-in-oil emulsion composition of any of [1] to [3], wherein the content of the emulsifier A is 0.02 to 1% by mass, and the total content of the emulsifier B and/or the emulsifier C is 0.02 to 1% by mass.
[5] The water-in-oil emulsion composition of any of [1] to [4], wherein the ratio (mass ratio) of the content of the emulsifier A to the total content of the emulsifier B and/or the emulsifier C is 0.2 to 3.0.
[6] The water-in-oil emulsion composition of any of [1] to [5], wherein the ratio (mass ratio) of the content of the emulsifier A to the total content of the emulsifier B and/or the emulsifier C is 0.4 to 2.5.
[7] The water-in-oil emulsion composition of any of [1] to [6],
   wherein the content of the oil phase is 10 to 70% by mass,
   the content of the water phase is 90 to 30% by mass, and
   the oil phase comprises the emulsifier A, and the emulsifier B and/or the emulsifier C.
[8] The water-in-oil emulsion composition of any of [1] to [7], wherein the water phase further comprises one or more ingredients selected from the group consisting of a thickener, a taste ingredient, and a flavoring ingredient.
[9] The water-in-oil emulsion composition of [8],
   wherein the thickener is any of inulin, xanthan gum, guar gum, and carrageenan, and
   the inulin is comprised at 0.3 to 72% by mass of the water-in-oil emulsion composition, or
   the xanthan gum, the guar gum, and the carrageenan are comprised at 0.003 to 3.6% by mass of the water-in-oil emulsion composition.
[10] The water-in-oil emulsion composition of [8] or [9], wherein the thickener is any of inulin, xanthan gum, guar gum, and carrageenan, and
   the inulin is comprised at 1 to 80% by mass of the water phase, or
   the xanthan gum, the guar gum, and the carrageenan are comprised at 0.01 to 4.0% by mass of the water phase.
[11] The water-in-oil emulsion composition of any of [1] to [10], wherein the viscosity of the water phase is 10 to 1000 mPa•s at 25°C.
[12] A meat substitute processed product comprising the water-in-oil emulsion composition of any of [1] to [11] and plant raw material.
[13] The meat substitute processed product of [12], comprising the water-in-oil emulsion composition at 2 to 30% by mass.
[14] A method for producing a water-in-oil emulsion composition for use in a meat substitute processed product comprising plant raw material, comprising:
   a step of mixing water, oil and fat, an emulsifier A, and an emulsifier B and/or an emulsifier C,
   wherein the emulsifier A is one or more emulsifiers selected from the group consisting of polyglycerin-condensed ricinoleic acid ester, glycerin fatty acid ester, sucrose fatty acid ester, and lecithin, the emulsifier A has an HLB of 9.0 or less,
   the emulsifier B is fatty acid ester and has saturated fatty acid as constituent fatty acid, and
   the emulsifier C is fatty acid ester and has only unsaturated fatty acid as constituent fatty acid.
[15] The production method of [14], further comprising mixing one or more ingredients selected from the group consisting of a thickener, a taste ingredient, and a flavoring ingredient.
[16] A meat substitute processed product comprising plant raw material, the processed product comprising the water-in-oil emulsion composition of any of [1] to [11]; vegetable protein; and a binder.

The present specification includes the contents of Japanese Patent Application 2023-58222, filed on March 31, 2023, the present application claiming the priority based on Japanese Patent Application 2023-58222.

All the publications, patents, and patent applications cited herein are incorporated herein by reference in their entireties.

### Advantageous Effects of Invention

The present invention can provide a new composition that enables imparting binding properties and juiciness to a meat substitute processed product comprising plant raw material.

### Description of Embodiments

The present invention relates to a water-in-oil emulsion composition for a processed product of a meat substitute comprising plant raw material (hereinafter occasionally referred to as a "plant raw material-containing meat substitute") (hereinafter occasionally referred to as a "plant raw material-containing meat substitute processed product" or merely as a "substitute processed product"). The composition is characterized by containing at least two emulsifiers of the emulsifier A, and the emulsifier B and/or the emulsifier C described below.

The plant raw material-containing meat substitute processed product containing the water-in-oil emulsion composition of the present invention is usually heated for cooking or sterilization (primary heating). The processed product is often reheated before eating (secondary heating). It is assumed that, in the water-in-oil emulsion composition, the emulsifier A mainly exhibits the effect of emulsifying the composition, and the emulsifier B and the emulsifier C mainly exhibit the effect of demulsifying the composition (making the composition unemulsified) during the heating of the composition. It is preferable that the demulsification be especially to make the composition unemulsified during the reheating. That is, it is assumed that the plant raw material-containing meat substitute processed product containing the water-in-oil emulsion composition of the present invention remains emulsified during cooking to have high binding properties, and the processed product is partially demulsified during heating before eating, oil and fat are likely to ooze out of the plant raw material-containing meat substitute processed product during the eating, so that the processed product is excellent in juiciness.

The composition containing only the emulsifier A is not made unemulsified in the secondary heating, so that the emulsion that is not demulsified may provide a feeling similar to juiciness. Unfortunately, such juiciness differs from that imparted by demulsification, and the resulting appearance-being white-is undesirable.

The "water-in-oil emulsion composition" as used herein refers to an emulsion composition in which a water phase (discontinuous phase), containing water, is uniformly dispersed (namely emulsified) in an oil phase (continuous phase), containing oil and fat.

In the present invention, the "emulsifier A" is one or more emulsifiers selected from the group consisting of polyglycerin-condensed ricinoleic acid ester, glycerin fatty acid ester, sucrose fatty acid ester, and lecithin.

The emulsifier A has an HLB of 9.0 or less. The HLB is a parameter indicating the balance between the hydrophilicity and the lipophilicity (hydrophobicity) of an emulsifier. A smaller numerical value thereof means higher lipophilicity. A larger numerical value thereof means higher hydrophilicity. The HLB can be calculated by multiplying 20 by the value obtained by dividing the molecular weight of the hydrophilic groups of the emulsifier by the total molecular weight of the emulsifier. In the water-in-oil emulsion composition of the present invention, lipophilic emulsifier having high affinity for the oil phase as the continuous phase is used to enable the water phase as the discontinuous phase to form fine stable particles. Accordingly, it is preferable that the HLB of the emulsifier A be small. That is, the HLB of the emulsifier A is preferably 7.0 or less, further preferably 5.0 or less.

The "polyglycerin-condensed ricinoleic acid ester", which is a polyglycerin emulsifier, can be obtained by esterification reaction of condensed ricinoleic acid mainly produced from castor oil as raw material with polyglycerin. The polyglycerin has preferably an average degree of polymerization of 2 to 16 and preferably an HLB of 0.5 to 5.

The "glycerin fatty acid ester", which is a monoglycerol-based emulsifier, can be obtained by esterifying one hydroxy group of glycerin with fatty acid. The fatty acid to be bound to the glycerin may be saturated or unsaturated fatty acid. The HLB of the fatty acid is preferably 2.0 to 7.0, further preferably 2.5 to 5.0. Specifically, the fatty acid is preferably palmitic acid, stearic acid, or oleic acid.

The "sucrose fatty acid ester" is a compound in which the eight hydroxy groups that sucrose has are esterified with any number of fatty acid molecules. Sucrose fatty acid esters include sucrose fatty acid esters having properties and functions widely varying from high hydrophilicity to oil-solubility. All the fatty acid molecules to be bound to sucrose may be of the same type or of two or more types. The fatty acid may be only saturated fatty acid(s), both saturated fatty acid(s) and unsaturated fatty acid(s), or only unsaturated fatty acid(s). The fatty acid is preferably unsaturated fatty acid. Specifically, the fatty acid is further preferably oleic acid and erucic acid. The fatty acid preferably has an HLB of 0.5 to 5.

The "lecithin" is extract mainly containing phospholipids derived from a plant such as soybeans or sunflowers or animal-derived phospholipids from eggs or others. The lecithin contains a mixture of phosphatidylcholine (PC), phosphatidylethanolamine (PE), phosphatidylinositol (PI), phosphatidic acid (PA), and other phospholipids as the main ingredients. The lecithin may contain oil and fat and other ingredients derived from the raw material. The lecithin may be enzyme-treated lecithin. The lecithin preferably has an HLB of 2 to 5.

The "emulsifier A" is preferably polyglycerin-condensed ricinoleic acid ester and/or lecithin from the viewpoint of forming the water-in-oil emulsion.

It is preferable that the content of emulsifier A in the oil-in-water type emulsion composition be an amount that enables emulsification of the composition while not preventing the demulsification of the composition. It is preferable that the content of the emulsifier A be appropriately set depending on the type of the emulsifier A (for example, emulsifying capacity). Since the plant raw material-containing meat substitute processed product containing the water-in-oil emulsion composition of the present invention is likely to be excellent in binding properties and juiciness, the content of the emulsifier A is preferably 0.02 to 1% by mass, more preferably 0.07 to 0.9% by mass, further preferably 0.15 to 0.7% by mass. The emulsifier A may be of one type, or may be a combination of two or more types of emulsifiers. If two or more emulsifiers are combined, the total amount thereof is preferably adjusted to the above-described amount.

In the present invention, the "emulsifier B" is fatty acid ester, and has saturated fatty acid in a molecule as constituent fatty acid. The emulsifier B may have only saturated fatty acid, or may have saturated fatty acid and unsaturated fatty acid. The "emulsifier C" is fatty acid ester, and has only unsaturated fatty acid as constituent fatty acid within its molecule.

The saturated fatty acid constituting the emulsifier B may be any saturated fatty acid. The saturated fatty acid is preferably lauric acid, myristic acid, palmitic acid, stearic acid, arachidic acid, or behenic acid, particularly preferably palmitic acid or stearic acid.

The unsaturated fatty acid constituting the emulsifier C may be monovalent unsaturated fatty acid or polyvalent unsaturated fatty acid. The unsaturated fatty acid is not particularly limited. The unsaturated fatty acid is preferably oleic acid, linoleic acid, linolenic acid, arachidic acid, arachidonic acid, or erucic acid, particularly preferably oleic acid or erucic acid.

As the emulsifier B or the emulsifier C, any emulsifier can be used that has been commonly used in the production of water-in-oil emulsion compositions until now. It is preferable that such emulsifiers be each independently glycerin fatty acid ester, polyglycerin fatty acid ester, sucrose fatty acid ester, sorbitan fatty acid ester, propylene glycol fatty acid ester, organic acid monoglyceride, or polyoxysorbitan fatty acid ester. It is particularly preferable that the emulsifiers be glycerin fatty acid ester, sucrose fatty acid ester, or sorbitan fatty acid ester. The emulsifier B and the emulsifier C may have common hydrophilic groups, or may have different hydrophilic groups. If the emulsifier B and the emulsifier C each contain multiple emulsifiers, those may have common hydrophilic groups, or may have different hydrophilic groups.

In the present invention, the emulsifier B and the emulsifier C, which are used in combination with the emulsifier A, may each be used individually or may be used in combination. If the emulsifier B and the emulsifier C is used in combination, since the plant raw material-containing meat substitute processed product containing the water-in-oil emulsion composition of the present invention is likely to be excellent in binding properties and juiciness, the mass ratio of the emulsifier B to the emulsifier C (emulsifier B/emulsifier C) is preferably 0.1 to 3.5, more preferably 0.23 to 2.5, further preferably 0.25 to 1.5.

The water-in-oil emulsion composition preferably contains the emulsifier B and/or the emulsifier C at such a total content that the emulsifier B and/or the emulsifier C can demulsify the composition, and does not prevent the emulsification of the composition. It is preferable that this total content be appropriately set depending on the types of the emulsifier B and the emulsifier C (for example, demulsifying capacity). Since the plant raw material-containing meat substitute processed product containing the water-in-oil emulsion composition of the present invention is likely to be excellent in binding properties and juiciness, the total content is preferably 0.02 to 1% by mass, more preferably 0.07 to 0.9% by mass, further preferably 0.15 to 0.7% by mass.

Since the plant raw material-containing meat substitute processed product containing the water-in-oil emulsion composition of the present invention is likely to be excellent in binding properties and juiciness, in the water-in-oil emulsion composition, the ratio (mass ratio) of the content of the emulsifier A to the total content of the emulsifier B and/or the emulsifier C (emulsifier A/(emulsifier B and/or emulsifier C)) is usually 0.2 to 3.0, preferably 0.4 to 2.5, more preferably 0.45 to 2, further preferably 0.7 to 1.5.

The water-in-oil emulsion composition of the present invention preferably contains the emulsifier A, the emulsifier B, and the emulsifier C with oil and fat in the oil phase.

In the present invention, the "oil and fat" may be any oil and fat as long as the oil and fat are suitable for eating. Examples of oil and fat usable in the present invention include plant oils and fats such as corn oil, linseed oil, tung oil, safflower oil, kaya oil, walnut oil, poppy oil, sunflower oil, safflower oil, cottonseed oil, canola oil, rapeseed oil, refined rapeseed oil, soyabean oil, mustard oil, kapok oil, rice oil, rice-bran oil, wheat germ oil, sesame oil, maize oil, peanut oil, olive oil, almond oil, macadamia nut oil, hazelnut oil, pumpkin seed oil, avocado oil, walnut oil, perilla oil, borage oil, camellia oil, tea oil, grapeseed oil, castor oil, coconut oil, evening primrose oil, shiso oil, palm oil, palm kernel oil, cacao butter, shea butter, and Borneo tallow nut oil; animal oils and fats such as fish oil, whale oil, beef tallow, lard, milk fat, and mutton tallow. Hydrogenated oils, interesterified oils, and fractionated oils thereof can also be usable. The oils or fats may be used alone. The oils and/or fats may be used in combination. Suitable oil and fat can be selected and used depending on the application of the present invention.

As long as the water-in-oil emulsion composition can be produced, the content of the oil phase in the water-in-oil emulsion composition of the present invention may be any content, and can be appropriately set depending on the application of the present invention. Since the plant raw material-containing meat substitute processed product containing the water-in-oil emulsion composition of the present invention is likely to be excellent in binding properties and juiciness, the content of the oil phase is preferably 10 to 70% by mass, more preferably 15 to 65% by mass, further preferably 25 to 55% by mass. The content of the oil phase can be adjusted by regulating the amount of the oil and fat blended.

As long as the water-in-oil emulsion composition can be produced, the content of the water phase in the water-in-oil emulsion composition of the present invention may be any content, and can appropriately be set depending on the application of the present invention. Since the plant raw material-containing meat substitute processed product containing the water-in-oil emulsion composition of the present invention is likely to be excellent in binding properties and juiciness, the content of the water phase is preferably 90 to 30% by mass, more preferably 85 to 35% by mass, further preferably 82 to 45% by mass. The content of the water phase can be adjusted by regulating the amount of water blended.

The water phase in the water-in-oil emulsion composition of the present invention may contain a thickener as needed. In general, the "thickener" means a polysaccharide that is dissolved in water to impart the viscosity, and also includes ingredients referred to as the so-called thickening stabilizer or water-soluble starch adhesive. Any thickener can be used that is commonly used in the production of food and drink, and is not particularly limited. Specific examples of the thickener usable in the present invention include, but not limited to, dextrins, starches, starch hydrolyzate, modified starch, inulin, glucomannan, pullulan, gum arabic, xanthan gum, tragacanth gum, gellan gum, guar gum, locust bean gum, tamarind seed gum, carrageenan, agar, LM pectin, HM pectin, methylcellulose, carboxymethylcellulose, and hydroxypropylmethylcellulose. The thickeners may be used alone, or in combination of two or more. Suitable thickener can be selected and used depending on the application of the present invention.

The amount of the thickener in the water-in-oil emulsion composition may be appropriately set depending on the type of the thickener. The amount is preferably any amount such that the composition is excellent in emulsification stability, and the thickener does not prevent the demulsification of the composition. Specifically, the amount of the thickener in the water-in-oil emulsion composition is preferably 0.1 to 10% by mass, more preferably 0.15 to 6% by mass, further preferably 0.2 to 3% by mass.

The viscosity of the water phase is 2000 mPa•s or less, preferably 10 to 1000 mPa•s, further preferably 20 to 500 mPa•s, the most preferably 50 to 200 mPa•s.

One feature of the present invention is resides in that, as described above, by including emulsifier A and emulsifier B and/or emulsifier C, emulsification is maintained during primary heating and demulsification occurs during secondary heating.

The present invention is further or alternative characterized in that the shape can be maintained even after water and oil are dissolved to flow out during the secondary heating. It is more difficult to maintain the shape of the meat substitute processed product containing plant raw material due to the characteristics of the raw materials than to maintain the shapes of processed products formed of animal-derived raw material. It may therefore be difficult to maintain the shape in the demulsification during the secondary heating. In the present invention, the viscosity of the water phase can be adjusted to 10 mPa•s or more to improve the binding properties after the heating.

The viscosity as used here means viscosity (mPa•s) at 25°C, and is measured with a viscosity/viscoelasticity measuring apparatus (HAAKE RheoStress 6000). The viscosity measured at a shear rate of 100 (1/s) with a shear rate of 2 to 120 (1/s) is defined as the water phase viscosity (mPa•s).

The thickener is particularly preferably any of inulin, xanthan gum, guar gum, and carrageenan from the viewpoint of binding properties after heating.

In this case, inulin is contained in the water-in-oil emulsion composition at preferably 0.3 to 72% by mass, further preferably 1.5 to 63% by mass, more preferably 6 to 54% by mass.

Inulin is contained in the water phase at preferably 1 to 80% by mass, further preferably 5 to 70% by mass, more preferably 20 to 60% by mass.

Xanthan gum, guar gum, or carrageenan is contained at preferably 0.003 to 3.6% by mass, further preferably 0.03 to 1.8% by mass, more preferably 0.06 to 1.4% by mass of the water-in-oil emulsion composition.

Xanthan gum, guar gum, or carrageenan is contained at preferably 0.01 to 4.0% by mass, further preferably 0.1 to 2.0% by mass, more preferably 0.2 to 1.5% by mass of the water phase.

The water phase in the water-in-oil emulsion composition of the present invention may further contain taste ingredients and flavoring ingredients such as salts (common salt and other salts), sugars, seasonings, flavorings, extracts (yeast extract, plant extract, and other extracts), and spices as needed. Any taste ingredient or flavoring ingredient can be used that has been commonly used for producing food and drink, and is not particularly limited. By including the taste ingredients and the flavoring ingredients in the water phase in the water-in-oil emulsion composition of the present invention, the composition, when applied to the plant raw material-containing meat substitute processed product, facilitates feeling the taste ingredients and the flavoring ingredients during eating.

The taste ingredients and the flavoring ingredients in the water-in-oil emulsion composition can be incorporated at any amount such that the taste ingredients and the flavoring ingredients do not prevent the effect of the present invention. The content can be appropriately set depending on the types of the taste ingredients and the flavoring ingredients and the application of the present invention. Since the plant raw material-containing meat substitute processed product containing the water-in-oil emulsion composition of the present invention is likely to be excellent in umami or taste, the total content of the taste ingredients and the flavoring ingredients is preferably 0.5 to 12% by mass, more preferably 0.8 to 10% by mass, further preferably 1 to 8% by mass.

As long as the effect of the present invention is not deteriorated, ingredients that have been commonly used for producing food and drink (hereinafter occasionally referred to as "other ingredients") may be further blended into the water-in-oil emulsion composition of the present invention as needed in amounts suitable for the desired application of the present invention. Examples of the other ingredients include, but not limited to, preservatives, antimicrobial agents, antiseptics, antioxidants, flavorants, coloring agents, dyes, lubricants, plasticizers, solvents, solubilizers, isotonizing agents, flavoring agents, vitamins, pH adjusters, chelating agents, dietary fiber, and emulsifiers other than the emulsifier A, the emulsifier B, and the emulsifier C. The other ingredients are contained in the water phase or the oil phase depending on the hydrophilicity or the lipophilicity thereof.

The water-in-oil emulsion composition of the present invention can be produced by emulsifying the emulsifier A, the emulsifier B and/or the emulsifier C, the oil and fat, and water; and a thickener, taste ingredients and flavoring ingredients, and other ingredients as needed through mixing and stirring. All the ingredients may be mixed and stirred simultaneously. Each ingredient may be added separately or in any combination, in any order, and mixed and stirred sequentially. For example, the emulsifier A, and the emulsifier B and/or the emulsifier C are added to the oil and fat. The mixture is heated and dissolved to yield the oil phase. On the other hand, the thickener, the taste ingredients, and the flavoring ingredients are added to water. The mixture is well-mixed and then heat-sterilized to obtain the water phase. The water phase is gradually added to the oil phase. The mixture is emulsified into a water-in-oil emulsion, which is then cool, mixed, and stirred to yield the water-in-oil emulsion composition of the present invention. More specifically, the emulsifier A, and the emulsifier B and/or the emulsifier C are added to the blended oil and fat. The mixture is heated at 70°C or more for 5 minutes to 2 hours, resulting in dissolution and the formation of the oil phase. The thickener, the taste ingredients and the flavoring ingredients are added to water. The mixture is well-mixed and then heat-sterilized at 70°C or more for 10 minutes to 2 hours to form the water phase. While the oil phase is heated at 50 to 80°C, the water phase is gradually added thereto for 5 to 120 minutes, preferably 20 to 90 minutes. After the completion of addition of the water phase, while the mixture is heated at 50 to 80°C for 5 minutes to 3 hours, preferably 20 minutes to 2 hours, the mixture is emulsified to yield the water-in-oil emulsified liquid. This emulsified liquid is cooled and kneaded with a heat exchanger for 1 minute to 4 hours until the temperature after the discharge is -10 to 40°C, preferably for 5 minutes to 3 hours until the temperature after the discharge is 5 to 20°C, so that the water-in-oil emulsion composition of the present invention can be yielded.

The water-in-oil emulsion composition of the present invention as one of the raw materials for the plant raw material-containing meat substitute processed product can be kneaded into the processed product.

The plant raw material-containing meat substitute processed product of the present invention usually contains the above-described water-in-oil emulsion composition of the present invention, vegetable protein, and a binder.

Examples of the "plant raw material-containing meat substitute processed product" in the present invention include processed food comprising the plant raw material-containing meat substitute comprising powdery, granular, or fibrous plant-derived protein as a substitute for meat, and preferably, a food that undergoes a cooking and/or sterilization step as the primary heating and is reheated upon eating. Examples of such food include, but not limited to, frozen food and chilled food. Specific preferable examples of the plant raw material-containing meat substitute processed product include minced meat, processed meat produced from edible meat as the main ingredient, and marine fish paste products as processed food produced from ground fish meat as the main ingredient. More specific examples include minced meat, Hamburg steak, patties, meatballs, nuggets, chicken meatballs, ham, sausages, salami, frankfurt sausages, American hot dogs, gyozas, shaomais, spring rolls, meat buns, xiao long baos, fried meat cakes, meat pie, ravioli, lasagna, meat loaf, cabbage rolls, green peppers stuffed with minced meat, fish fries, tuna salad, chikuwa, steamed fish paste, and deep-fried fish paste.

It is preferable that the content of the above-mentioned water-in-oil emulsion composition in the plant raw material-containing meat substitute processed product of the present invention be appropriately determined depending on the type of the processed product and the degrees of expected effects on binding properties and juiciness. Since the plant raw material-containing meat substitute processed product containing the water-in-oil emulsion composition of the present invention is likely to be excellent in binding properties and juiciness, the content of the above-described water-in-oil emulsion composition in the plant raw material-containing meat substitute processed product of the present invention is preferably 2 to 30% by mass, more preferably 3 to 25% by mass, further preferably 4 to 20% by mass before the primary heating.

The "vegetable protein" in the present invention is plant-derived protein. As long as the "vegetable protein" is addable to food, any protein is usable without any limitation. Examples of the vegetable protein include proteins derived from various plants such as pulses such as soybeans, broad beans, green peas, mung beans, chickpeas, peanuts, lupins, pigeon peas, sword beans, wild soybeans, green beans, azuki beans, cowpeas, lentils, locust beans, red kidney beans, and black soybeans; cereal grains such as oats, barley, wheat, and rye; rice; corn; potatoes; sweet potatoes; chia; quinoa; lucerne; hemp; almonds; cashew nuts; walnuts; hazelnuts; Brazil nuts; pistachios; pumpkin seeds; coconuts; grape seeds; spinach; asparagus; broccoli; kale; cranberries; pomegranates; rapeseeds; sunflower seeds; cottonseeds; linseed; sesame as well as enzymatic decomposition products thereof; and thermolysis product thereof. The vegetable proteins may be used alone whatever they are, or in combination of two or more. Suitable vegetable protein can be selected and used depending on a desired application.

The vegetable protein may have any shape. Powdery, granular, or fibrous vegetable protein can be suitably used.

The content of the plant raw material-containing meat substitute processed product of the present invention may contain the vegetable protein is optional and is not particularly limited. Since the plant raw material-containing meat substitute processed product is likely to yield a texture similar to those of traditional processed products containing meat or fish meat, it is preferable that the vegetable protein be substituted for preferably 70% by mass or less, more preferably 50% by mass or less, further preferably 30% by mass or less of protein contained in traditional processed products containing meat or fish meat. Furthermore, it is preferable that, in processed products for vegans or health, the vegetable protein be substituted for preferably 50% by mass or more, more preferably 60% by mass or more, further preferably 80% by mass or more, particularly preferably 100% by mass of protein contained in traditional processed products containing meat or fish meat. That is, the vegetable protein is contained at preferably 50% by mass or more, more preferably 60% by mass or more, further preferably 80% by mass or more, particularly preferably 100% by mass of all the protein contained in the plant raw material-containing meat substitute processed product.

The "binder" in the present invention may be a binder that has been commonly used for producing food. Any binder can be used and is not particularly limited. Examples of the binder include, but not limited to, starch, modified starches (such as acetylated adipic acid-crosslinked starch, acetylated phosphoric acid-crosslinked starch, acetylated oxidized starch, starch sodium octenyl succinate, starch acetate, oxidized starch, hydroxypropyl starch, hydroxypropyl phosphoric acid-crosslinked starch, phosphoric acid monoesterified phosphoric acid-crosslinked starch, phosphorylated starch, and phosphoric acid-crosslinked starch), transglutaminase, alginic acid or alginates (for example, sodium alginate and calcium alginate), orthophosphates (monosodium phosphate and dipotassium phosphate), polymerized phosphates (such as sodium polyphosphate and sodium metaphosphate), and polysaccharides (such as pullulan, carrageenan, glucomannan, konjac gum, methylcellulose, carboxymethylcellulose, hydroxypropylmethylcellulose pectin, locust bean gum, gum arabic, xanthan gum, tragacanth gum, gellan gum, guar gum, linseed gum, tamarind seed gum, and agar). Animal protein (such as albumen, collagen, or lactoprotein) or vegetable protein (such as soy protein, wheat protein, and wheat gluten) may act as the binder. The binders may be used alone, or in combination of two or more. Suitable binder can be selected and used depending on a desired application.

The binder may be in any form. It is preferable added to and mixed with other ingredients in the form of a paste in which the binder is kneaded with water or the oil and fat or an emulsion into which the binder is emulsified with water and the oil and fat (such a form is also referred to as "emulsion curd").

It is preferable that the content of the binder in the plant raw material-containing meat substitute processed product of the present invention be appropriately determined depending on the type of the processed product or the type or the form of the binder. Since the plant raw material-containing meat substitute processed product containing the water-in-oil emulsion composition is likely to be excellent in binding properties, the content of the binder in the plant raw material-containing meat substitute processed product of the present invention is preferably 0.1 to 10% by mass, more preferably 0.5 to 5% by mass, further preferably 0.8 to 3% by mass before the primary heating.

As long as the effect of the present invention is not deteriorated, the above-described taste ingredients, the flavoring ingredients, and other ingredients can be appropriately and further blended into the plant raw material-containing meat substitute processed product of the present invention in amounts depending on a desired application as needed.

The ingredients such as the above-described water-in-oil emulsion composition of the present invention, the vegetable protein, and the binder as well as the other ingredients to be blended as needed can be mixed in the above-described amounts to produce a plant raw material-containing meat substitute, which can be processed to produce the plant raw material-containing meat substitute processed product of the present invention.

In the plant raw material-containing meat substitute processed product of the present invention, the water-in-oil emulsion composition of the present invention enables imparting binding properties to the vegetable protein to produce the processed product efficiently. Since the composition behaves as oil and fat during the primary heating, the composition does not prevent the production. While the composition can be demulsified during the heating upon eating to impart juiciness to the meat substitute, the free emulsifiers can impart binding properties to the meat substitute. While the water-in-oil emulsion composition remains emulsified until the heating upon the eating, the composition behaves as oil and fat, which can also be used to encapsulate the taste ingredients and the flavoring ingredients in the water phase. For example, this enables blending highly volatile ingredients or ingredients that are likely to be scattered into the processed product more efficiently than direct addition of taste ingredients and flavoring ingredients to the processed product.

Although the present invention will be described with reference to Examples hereinafter, the present invention is not limited to these Examples.

### Examples

### <Preparation 1 of water-in-oil emulsion composition>

The ingredients were mixed at the blending ratios as shown in Tables 1 to 4 to prepare water-in-oil emulsion compositions.

In the preparation of each composition, the emulsifier A, the emulsifier B, and the emulsifier C were added to the dissolved and mixed edible oils and fats. The mixture was heated at 70°C for dissolution to prepare an oil phase. On the other hand, common salt, the flavorings, and the thickener were added to water. The mixture was sufficiently stirred and then heat-sterilized at 75°C for 30 minutes to prepare a water phase. While the oil phase was maintained at a temperature of 60°C, the water phase was gradually added to the oil phase with stirring at 2000 rpm using a homomixer (MARK II type 2.5, which is available from PRIMIX Corporation). The mixture was then stirred at 6000 rpm for 5 to 10 minutes to prepare an emulsion. While the emulsion was rapidly cooled in an ice-cooled bowl, the emulsion was kneaded to yield each of the water-in-oil emulsion compositions as the present invention (Examples 1 to 30 and 53 to 64 and Comparative Examples 6 to 13). In the item "Gelation" described in Tables 2 and 3, the "○" means that the composition was gelled, and the "×" means that the composition was ungelled with oil-water separation.

**[Table 1]**

| | | | | Examination of type of emulsifier and concentration of water phase | | | | | | | | | | | |
|---|---|---|---|---|---|---|---|---|---|---|---|---|---|---|---|
| | | | | Example 1 | Example 2 | Example 3 | Example 4 | Example 5 | Example 6 | Example 7 | Example 8 | Example 9 | Example 10 | Example 11 | Example 12 |
| Oil phase | Oil and fat | Purified palm oil | part by mass | 13.5 | 13.5 | 13.5 | 11.5 | 8.3 | 5.2 | 13.5 | 8.3 | 13.5 | 8.3 | - | - |
| | | Purified coconut oil | part by mass | - | - | - | - | - | - | - | - | - | - | 9.5 | 5.9 |
| | | Extremely hydrogenated soy oil | part by mass | 1.4 | 1.4 | 1.4 | 1.1 | 0.8 | 0.5 | 1.4 | 0.8 | 1.4 | 0.8 | 1.4 | 0.8 |
| | | Canola oil | part by mass | 30.2 | 30.2 | 30.2 | 25.6 | 18.7 | 11.9 | 30.2 | 18.5 | 30.2 | 18.5 | 34.2 | 21.2 |
| | Emulsifier A | Polyglycerin-condensed ricinoleic acid ester-1 | part by mass | 0.40 | 0.40 | 0.40 | 0.40 | 0.40 | 0.40 | 0.35 | 0.40 | - | - | - | - |
| | | Polyglycerin-condensed ricinoleic acid ester-2 | part by mass | - | - | - | - | - | - | - | - | 0.40 | 0.40 | 0.40 | 0.40 |
| | Emulsifier B | Glycerin monostearate ester | part by mass | 0.10 | - | - | 0.10 | 0.10 | 0.10 | 0.10 | 0.10 | 0.10 | 0.10 | 0.10 | 0.10 |
| | | Sucrose stearate ester | part by mass | - | 0.10 | 0.10 | - | - | - | - | - | - | - | - | - |
| | Emulsifier C | Glycerin monooleate ester | part by mass | 0.20 | 0.20 | 0.00 | 0.20 | 0.20 | 0.20 | - | - | 0.20 | 0.20 | 0.20 | 0.20 |
| | | Sucrose oleate ester | part by mass | - | - | - | - | - | - | 0.20 | 0.20 | 0.10 | 0.10 | 0.10 | 0.10 |
| | | Sucrose erucate ester | part by mass | 0.10 | 0.10 | 0.20 | 0.10 | 0.10 | 0.10 | 0.10 | 0.10 | - | - | - | - |
| Water phase | Common salt | Table salt | part by mass | 1.0 | 1.0 | 1.0 | 1.1 | 1.3 | 1.5 | 1.0 | 1.3 | - | - | - | - |
| | | Crude salt | part by mass | - | - | - | - | - | - | - | - | 1.0 | 1.3 | 1.0 | 1.3 |
| | Thickener | Starch hydrolyzate | part by mass | 0.25 | 0.25 | 0.25 | 0.28 | 0.33 | 0.38 | 0.25 | 0.33 | 0.25 | 0.33 | 0.25 | 0.33 |
| | Water | Deionized water | part by mass | 53.1 | 53.1 | 53.1 | 60.0 | 70.0 | 80.0 | 53.1 | 70.0 | 53.1 | 70.0 | 53.1 | 70.0 |
| | | Percentage of oil % | | 45 | 45 | 45 | 38 | 28 | 18 | 45 | 28 | 31 | 19 | 45 | 28 |
| | | Percentage of oil phase | % by mass | 46 | 46 | 46 | 39 | 28 | 18 | 46 | 28 | 46 | 28 | 46 | 28 |
| | | Percentage of water phase | % by mass | 54 | 54 | 54 | 61 | 72 | 82 | 54 | 72 | 54 | 72 | 54 | 72 |
| | | Emulsifier A | % by mass | 0.4 | 0.4 | 0.4 | 0.4 | 0.4 | 0.4 | 0.3 | 0.4 | 0.4 | 0.4 | 0.4 | 0.4 |
| | | Emulsifier B + C | % by mass | 0.4 | 0.4 | 0.3 | 0.4 | 0.4 | 0.4 | 0.4 | 0.4 | 0.4 | 0.4 | 0.4 | 0.4 |
| | | A+B+C | % by mass | 0.8 | 0.8 | 0.7 | 0.8 | 0.8 | 0.8 | 0.7 | 0.8 | 0.8 | 0.8 | 0.8 | 0.8 |
| | | A / (B + C) | - | 1.0 | 1.0 | 1.3 | 1.0 | 1.0 | 1.0 | 0.9 | 1.0 | 1.0 | 1.0 | 1.0 | 1.0 |

**[Table 2]**

| | | | | Examination of type of emulsifier and concentration of water phase | | | | | | | | | | | | | | |
|---|---|---|---|---|---|---|---|---|---|---|---|---|---|---|---|---|---|---|
| | | | | Example 53 | Example 54 | Example 55 | Example 56 | Example 57 | Example 58 | Example 59 | Comparative Example 6 | Comparative Example 7 | Comparative Example 8 | Comparative Example 9 | Comparative Example 10 | Comparative Example 11 | Comparative Example 12 | Comparative Example 13 |
| Oil phase | Oil and fat | Purified palm oil | part by mass | 13.5 | 13.5 | 13.5 | 13.5 | 13.5 | 20.8 | 20.8 | 13.5 | 13.5 | 13.5 | 13.5 | 13.5 | 13.5 | 13.5 | 13.5 |
| | | Extremely hydrogenated soy oil | part by mass | 1.4 | 1.4 | 1.4 | 1.4 | 1.4 | 2.1 | 2.1 | 1.4 | 1.4 | 1.4 | 1.4 | 1.4 | 1.4 | 1.4 | 1.4 |
| | | Canola oil | part by mass | 30.0 | 30.0 | 30.0 | 30.0 | 30.0 | 46.2 | 46.2 | 30.0 | 30.0 | 30.0 | 30.0 | 30.0 | 30.0 | 30.0 | 30.0 |
| | Emulsifier A | Polyglycerin-condensed ricinoleic acid ester-1 | part by mass | 0.30 | - | 0.50 | 0.50 | 0.50 | 0.24 | 0.10 | 1.00 | - | - | - | - | - | - | - |
| | | Lecithin | part by mass | 0.10 | 0.30 | - | - | - | - | - | - | - | - | - | - | - | - | - |
| | Emulsifier B | Glycerin monostearate ester | part by mass | 0.10 | 0.30 | - | - | - | 0.06 | 0.03 | - | 0.50 | - | 0.50 | 1.00 | - | - | - |
| | | Sucrose stearate ester | part by mass | - | - | - | - | 0.50 | - | - | - | - | 0.50 | - | - | 1.00 | - | - |
| | Emulsifier C | Glycerin monooleate ester | part by mass | 0.20 | - | 0.50 | - | - | 0.12 | 0.05 | - | 0.50 | 0.50 | - | - | - | 1.00 | - |
| | | Sucrose erucate ester | part by mass | 0.10 | 0.40 | - | 0.50 | - | 0.06 | 0.03 | - | - | - | 0.50 | - | - | - | 1.00 |
| Water phase | Common salt | Crude salt | part by mass | 1.0 | 1.0 | 1.0 | 1.0 | 1.0 | 0.6 | 0.6 | 1.0 | 1.0 | 1.0 | 1.0 | 1.0 | 1.0 | 1.0 | 1.0 |
| | Flavoring | Yeast extract | part by mass | 0.5 | 0.5 | 0.5 | 0.5 | 0.5 | 0.3 | 0.3 | 0.5 | 0.5 | 0.5 | 0.5 | 0.5 | 0.5 | 0.5 | 0.5 |
| | | Protein hydrolyzate | part by mass | 0.5 | 0.5 | 0.5 | 0.5 | 0.5 | 0.3 | 0.3 | 0.5 | 0.5 | 0.5 | 0.5 | 0.5 | 0.5 | 0.5 | 0.5 |
| | Thickener | Starch hydrolyzate | part by mass | 0.25 | 0.25 | 0.25 | 0.25 | 0.25 | 0.14 | 0.14 | 0.25 | 0.25 | 0.25 | 0.25 | 0.25 | 0.25 | 0.25 | 0.25 |
| | Water | Deionized water | part by mass | 52.0 | 52.0 | 52.0 | 52.0 | 52.0 | 28.8 | 28.8 | 52.0 | 52.0 | 52.0 | 52.0 | 52.0 | 52.0 | 52.0 | 52.0 |
| | | Percentage of oil phase | % by mass | 46 | 46 | 46 | 46 | 46 | 70 | 70 | 46 | 46 | 46 | 46 | 46 | 46 | 46 | 46 |
| | | Percentage of water phase | % by mass | 54 | 54 | 54 | 54 | 54 | 30 | 30 | 54 | 54 | 54 | 54 | 54 | 54 | 54 | 54 |
| | | Emulsifier A | % by mass | 0.4 | 0.3 | 0.5 | 0.5 | 0.5 | 0.2 | 0.1 | 1.0 | 0.0 | 0.0 | 0.0 | 0.0 | 0.0 | 0.0 | 0.0 |
| | | Emulsifier B+C | % by mass | 0.4 | 0.7 | 0.5 | 0.5 | 0.5 | 0.2 | 0.1 | 0.0 | 1.0 | 1.0 | 1.0 | 1.0 | 1.0 | 1.0 | 1.0 |
| | | A+B+C | % by mass | 0.8 | 1.0 | 1.0 | 1.0 | 1.0 | 0.5 | 0.2 | 1.0 | 1.0 | 1.0 | 1.0 | 1.0 | 1.0 | 1.0 | 1.0 |
| | | A/ (B + C) | - | 1.0 | 0.4 | 1.0 | 1.0 | 1.0 | 1.0 | 1.0 | - | - | - | - | - | - | - | - |
| | | Gelation | | ○ | ○ | ○ | ○ | ○ | ○ | ○ | ○ | × | × | × | × | × | × | ○ |

**[Table 3]**

| | | | | Examination of concentration of emulsifier | | | | | | | | | | | | | | |
|---|---|---|---|---|---|---|---|---|---|---|---|---|---|---|---|---|---|---|
| | | | | Example 13 | Example 14 | Example 15 | Example 16 | Example 17 | Example 18 | Example 19 | Example 20 | Example 21 | Example 22 | Example 60 | Example 61 | Example 62 | Example 63 | Exampl e 64 |
| Oil phease | Oil and fat | Purified palm oil | part by mass | 13.5 | 13.5 | 13.5 | 13.5 | 13.5 | 13.5 | 13.5 | 13.5 | 13.5 | 13.5 | 13.5 | 13.5 | 13.5 | 13.5 | 13.5 |
| | | Extremely hydrogenated soy oil | part by mass | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| | | Canola oil | part by mass | 30.2 | 30.2 | 30.2 | 30.2 | 30.2 | 30.2 | 30.2 | 30.2 | 30.2 | 30.2 | 30.0 | 30.0 | 30.0 | 30.0 | 30.0 |
| | Emulsifier A | Polyglycerin-condensed ricinoleic acid ester-1 | part by mass | 0.35 | 0.35 | 0.30 | 0.36 | 0.30 | 0.26 | 0.20 | 0.40 | 0.30 | 0.27 | 0.40 | 0.20 | 0.30 | 0.40 | 0.40 |
| | Emulsifier B | Glycerin monostearate ester | part by mass | 0.10 | 0.10 | 0.10 | 0.09 | 0.08 | 0.07 | 0.05 | 0.10 | 0.08 | 0.07 | 0.10 | 0.10 | 0.20 | 0.30 | 0.20 |
| | | Sucrose stearate ester | part by mass | - | - | - | - | - | - | - | - | - | - | - | - | - | - | 0.20 |
| | Emulsifier C | Glycerin monooleate ester | part by mass | 0.20 | 0.15 | 0.20 | 0.18 | 0.15 | 0.13 | 0.10 | 0.20 | 0.15 | 0.13 | 0.20 | 0.20 | 0.50 | 0.20 | 0.10 |
| | | Sucrose erucate ester | part by mass | 0.10 | 0.10 | 0.10 | 0.09 | 0.08 | 0.07 | 0.05 | 0.10 | 0.08 | 0.07 | 0.10 | 0.10 | 0.30 | 0.10 | 0.10 |
| Water phase | Common salt | Table salt | part by mass | 1.0 | 1.0 | 1.0 | - | - | - | - | 1.0 | 1.0 | 1.0 | - | - | - | - | - |
| | | Crude salt | part by mass | - | - | - | 1.0 | 1.0 | 1.0 | 1.0 | - | - | - | 1.0 | 1.0 | 1.0 | 1.0 | 1.0 |
| | Flavoring | Yeast extract | part by mass | - | - | - | - | - | - | - | - | - | - | 0.5 | 0.5 | 0.5 | 0.5 | 0.5 |
| | | Protein hydrolyzate | part by mass | - | - | - | - | - | - | - | - | - | - | 0.5 | 0.5 | 0.5 | 0.5 | 0.5 |
| | Thickener | Starch hydrolyzate | part by mass | 0.25 | 0.25 | 0.25 | 0.25 | 0.25 | 0.25 | 0.25 | 0.50 | 0.50 | 0.50 | 0.25 | 0.25 | 0.25 | 0.25 | 0.25 |
| | Water | Water | part by mass | 531 | 53.1 | 53.1 | 53.1 | 53.1 | 53.1 | 53.1 | 53.1 | 53.1 | 53.1 | 52.0 | 52.0 | 52.0 | 52.0 | 52.0 |
| | | Percentage of oil phase | % by mass | 46 | 46 | 46 | 46 | 46 | 46 | 46 | 46 | 45 | 45 | 46 | 46 | 46 | 46 | 46 |
| | | Percentage of water phase | % by mass | 54 | 54 | 54 | 54 | 54 | 54 | 54 | 54 | 55 | 55 | 54 | 54 | 54 | 54 | 54 |
| | | Emulsifier A | % by mass | 0.3 | 0.3 | 0.3 | 0.4 | 0.3 | 0.3 | 0.2 | 0.4 | 0.3 | 0.3 | 0.4 | 0.2 | 0.3 | 0.4 | 0.4 |
| | | Emulsifier B + C | % by mass | 0.4 | 0.3 | 0.4 | 0.4 | 0.3 | 0.3 | 0.2 | 0.4 | 0.3 | 0.3 | 0.4 | 0.4 | 1.0 | 0.6 | 0.6 |
| | | A+B+C | % by mass | 0.7 | 0.7 | 0.7 | 0.7 | 0.6 | 0.5 | 0.4 | 0.8 | 0.6 | 0.5 | 0.8 | 0.6 | 1.3 | 1.0 | 1.0 |
| | | A / (B + C) | - | 0.9 | 1.0 | 0.8 | 1.0 | 1.0 | 1.0 | 1.0 | 1.0 | 1.0 | 1.0 | 1.0 | 0.5 | 0.3 | 0.7 | 0.7 |
| | | Gelation | | ○ | ○ | ○ | ○ | ○ | ○ | ○ | ○ | ○ | ○ | ○ | ○ | ○ | ○ | ○ |

**[Table 4]**

| | | | | Addition of flavorings | | | | | | | |
|---|---|---|---|---|---|---|---|---|---|---|---|
| | | | | Example 23 | Example 24 | Example 25 | Example 26 | Example 27 | Example 28 | Example 29 | Example 30 |
| Oil phase | Oil and fat | Purified palm oil | part by mass | 13.5 | 13.5 | 13.5 | 13.5 | 13.5 | 13.5 | 8.3 | 8.3 |
| | | Extremely hydrogenated soy oil | part by mass | 1.4 | 1.4 | 1.4 | 1.4 | 1.4 | 1.4 | 0.8 | 0.8 |
| | | Canola oil | part by mass | 30.2 | 30.2 | 30.2 | 30.2 | 30.2 | 30.2 | 18.5 | 18.5 |
| | Emulsifier A | Polyglycerin-condensed ricinoleic acid ester-1 | part by mass | 0.40 | 0.40 | 0.40 | 0.40 | 0.40 | 0.40 | 0.40 | 0.40 |
| | Emulsifier B | Glycerin monostearate ester | part by mass | 0.10 | 0.10 | 0.10 | 0.10 | 0.10 | 0.10 | 0.10 | 0.10 |
| | Emulsifier C | Glycerin monooleate ester | part by mass | 0.20 | 0.20 | 0.20 | 0.20 | 0.20 | 0.20 | 0.20 | 0.20 |
| | | Sucrose erucate ester | part by mass | 0.10 | 0.10 | 0.10 | 0.10 | 0.10 | 0.10 | 0.10 | 0.10 |
| Water phase | Common salt | Table salt | part by mass | - | - | - | 0.84 | 0.68 | - | - | - |
| | | Crude salt | part by mass | 1.00 | - | - | - | - | 0.84 | 1.32 | 1.11 |
| | | Rock salt-1 | part by mass | - | 1.00 | - | - | - | - | - | - |
| | | Rock salt-2 | part by mass | - | - | 1.00 | - | - | - | - | - |
| | Flavoring | Yeast extract | part by mass | - | - | - | 2.00 | 4.00 | 2.00 | - | 2.64 |
| | Thickener | Starch hydrolyzate | part by mass | 0.25 | 0.25 | 0.25 | 0.25 | 0.25 | 0.25 | 0.33 | 0.33 |
| | Water | Water | part by mass | 53.1 | 53.1 | 53.1 | 53.1 | 53.1 | 53.1 | 70.0 | 70.0 |
| | | Percentage of oil % | | 45 | 45 | 45 | 44 | 43 | 44 | 28 | 27 |
| | | Percentage of oil phase | % by mass | 46 | 46 | 46 | 45 | 44 | 45 | 28 | 28 |
| | | Percentage of water phase | % by mass | 54 | 54 | 54 | 55 | 56 | 55 | 72 | 72 |
| | | Emulsifier A | % by mass | 0.4 | 0.4 | 0.4 | 0.4 | 0.4 | 0.4 | 0.4 | 0.4 |
| | | Emulsifier B + C | % by mass | 0.4 | 0.4 | 0.4 | 0.4 | 0.4 | 0.4 | 0.4 | 0.4 |
| | | A+B+C | % by mass | 0.8 | 0.8 | 0.8 | 0.8 | 0.8 | 0.8 | 0.8 | 0.8 |
| | | A / (B + C) | - | 1.0 | 1.0 | 1.0 | 1.0 | 1.0 | 1.0 | 1.0 | 1.0 |

The raw materials used for Examples 1 to 30 and 53 to 64 and Comparative Examples 6 to 13 are shown blow.

| | |
|---|---|
| Oil and fat | Purified palm oil (The Nisshin OilliO Group, Ltd.) |
| | Purified coconut oil (The Nisshin OilliO Group, Ltd.) |
| | Extremely hydrogenated soy oil (YOKOZEKI) |
| | Canola oil (J-OIL MILLS, INC.) |
| Emulsifier A | Polyglycerin-condensed ricinoleic acid ester-1 " SY-Glyster CRS-75" (Sakamoto Yakuhin Kogyo Co., Ltd.) |
| | Polyglycerin-condensed ricinoleic acid ester-2 "Myvatex Choco Flow" (Kerry Group plc.) |
| | Lecithin "SLP-Paste" (Tsuji Oil Mills co., Ltd.) |
| Emulsifier B | Glycerin monostearate ester "DIMODAN HP/20-M" (DANISCO) |
| | Sucrose stearate ester "RYOTO Sugar Ester S-170" (Mitsubishi Chemical Group Corporation) |
| | Glycerin monooleate ester "DIMODAN MO/90-J" (DANISCO) |
| | Sucrose oleate ester "RYOTO Sugar Ester O-170" (Mitsubishi Chemical Group Corporation) |
| | Sucrose erucate ester "RYOTO Sugar Ester ER-290" (Mitsubishi Chemical Group Corporation) |
| Common salt | Table salt (The Salt Industry Center of Japan.) |
| | Crude salt (Nihonkaisui Co., Ltd.) |
| | Rock salt-1 "Pink Rock Salt" |
| | Rock salt-2 "Lorraine Rock Salt" |
| Flavoring | Yeast extract " Yeast Extract 21-TF" (Fuji Foods Corporation) |
| | Protein hydrolyzate "HPP-4BE" (Mitsubishi Corporation Life Sciences Limited) |
| Thickener | Starch hydrolyzate "PINEDEX #2" (Matsutani Chemical Industry Co., Ltd.) |

The water-in-oil emulsion compositions shown in Examples 1 to 30 and 53 to 64 as the present invention exhibited no oil-water separation, demonstrated satisfactory gelling properties, and had satisfactory particle sizes (particle diameters of 30 µm or less). In contrast, the water-in-oil emulsion composition shown in Comparative Example 6 was formulated using only emulsifier A, and the water-in-oil emulsion composition shown in Comparative Example 13 was formulated using only emulsifier C. Both of these formulations exhibited no oil-water separation and demonstrated satisfactory gelling properties. However, in the formulations of Comparative Examples 7 to 12, which used only emulsifier B and/or emulsifier C, oil-water separation was observed, and gel properties were not exhibited.

As a usage example employing the water-in-oil emulsion compositions obtained as described above in Examples 1 to 30 and 53 to 64, an additive test was conducted using the following soy meat Hamburg steaks. The binding properties and juiciness of the soy meat Hamburg steak patty were evaluated through sensory evaluations.

### <Examples of use: soy meat Hamburg steak>

### [Production of emulsion curd for soy meat Hamburg steak]

Emulsion curd was produced having a blending ratio shown in the following Table 5. Isolated soy protein and methylcellulose were powder-to-powder mixed and then mixed with rapeseed oil to yield a homogenous paste. A food cutter mixer (DLC-N7J, Conair Japan G.K.) was charged therewith. Cold water was gradually added with stirring for 60 seconds, resulting in emulsification. The emulsion was stirred for 3 minutes after the completion of addition of the water to yield homogenous curd, which was cooled in a refrigerator for 30 minutes or more, frozen for one night or longer, and thawed in a refrigerator to be used.

**[Table 5]**

| Prescription of emulsion curd | | |
|---|---|---|
| Raw material name | Blend percentage (%) | Blended weight (q) |
| Methylcellulose | 3.0 | 15.0 |
| Rapeseed oil | 11.0 | 55.0 |
| Soy protein isolate | 11.0 | 55.0 |
| Cold water (at 5°C or less) | 75.0 | 375.0 |
| Total | 100.01 | 500.0 |

| | | |
|---|---|---|
| The following shows the raw materials used for the emulsion curd. Methylcellulose " METOLOSE MCE-100TS" (Shin-Etsu Chemical Co., Ltd.) Rapeseed oil "Canola oil" (J-OIL MILLS, INC.) Soy protein isolate "Solpy 6000H" (The Nisshin OilliO Group, Ltd.) | | |

### [Production of soy meat Hamburg steak]

Soy meat Hamburg steaks were produced from the blends shown in the following Tables 6 to 11. Granular soy protein was rehydrated in advance by adding water for rehydration, mixing, and allowing it to stand for at least 30 minutes. The flavoring (A) was uniformly mixed with a table mixer (KEN MIX AICOH CHEF PRO, AICOHSHA MFG. CO., LTD.). The emulsion curd (B) and the processed oil and fat (C) were further added, followed by uniform stirring. The rehydrated granular soy protein was added thereto, followed by uniform stirring, resulting in each soy meat Hamburg steak patty. Then, 60 g of this patty was molded with a mold ring for Hamburg steak. Each side of the molded soy meat Hamburg steak was browned at 220°C for 90 seconds. The Hamburg steak was then roasted with a steam convection oven (TSCO6EDN, Tanico) (steam: 100%, 150°C, 10 minutes).

The roasted soy meat Hamburg steak was rapidly frozen with a blast chiller (FCS-BCU06NB, Panasonic Corporation) at -35°C for 1 hour. The frozen soy meat Hamburg steak was individually vacuum-packaged and stored in a freezer until the evaluations.

**[Table 6]**

| Prescription of soy meat Hamburg steak (Evaluation 1) | | | | | |
|---|---|---|---|---|---|
| Unit of all: Part by weight | | | | | |
| Raw material name | | Comparative Example 1 | Comparative Example 2 | Example 31 | Example 32 |
| Granular soy protein | | 66 | 66 | 66 | 66 |
| Water for rehydration | | 132 | 132 | 132 | 132 |
| Flavoring (A) | Onion powder | 12 | 12 | 12 | 12 |
| | Dark soy sauce | 12 | 12 | 12 | 12 |
| | Superfine sugar | 4 | 4 | 4 | 4 |
| | Yeast extract-1 | 3 | 3 | 3 | 3 |
| | Common salt | 0.8 | 0.8 | 0.8 | 0.8 |
| Emulsion curd (B) | | 150 | 150 | 150 | 150 |
| Processed oil and fat (C) | botanova (lard) | 20 | - | - | - |
| | LS03 | - | 20 | - | - |
| | Example 1 | - | - | 20 | - |
| | Example 3 | - | - | - | 20 |
| Total | | 400 | 400 | 400 | 400 |
| Lipid in Hamburg steak (%) | | 9% | 9% | 6% | 6% |

**[Table 7]**

| Prescription of soy meat Hamburg steak (Evaluation 2) | | | | | |
|---|---|---|---|---|---|
| Unit of all: Part by weight | | | | | |
| Raw material name | | Comparative Example 1 | Example 33 | Example 34 | Example 35 |
| Granular soy protein | | 66 | 66 | 66 | 66 |
| Water for rehydration | | 132 | 132 | 132 | 132 |
| Flavoring (A) | Onion powder | 12 | 12 | 12 | 12 |
| | Dark soy sauce | 12 | 12 | 12 | 12 |
| | Superfine sugar | 4 | 4 | 4 | 4 |
| | Yeast extract-1 | 3 | 3 | 3 | 3 |
| | Common salt | 0.8 | 0.8 | 0.8 | 0.8 |
| Emulsion curd (B) | | 150 | 150 | 150 | 150 |
| Processed oil and fat (C) | botanova (lard) | 20 | - | - | - |
| | Example 4 | - | 20 | - | - |
| | Example 5 | - | - | 20 | - |
| | Example 6 | - | - | - | 20 |
| Total | | 400 | 400 | 400 | 400 |
| Lipid in Hamburg steak (%) | | 9% | 6% | 6% | 5% |

**[Table 8]**

| Prescription of soy meat Hamburg steak (Evaluation 3) | | | | | | | | | | |
|---|---|---|---|---|---|---|---|---|---|---|
| Unit of all: Part by weight | | | | | | | | | | |
| Raw material name | | Comparative Example 3 | Example 36 | Example 37 | Example 38 | Example 39 | Example 40 | Example 41 | Example 42 | Example 43 |
| Granular soy protein | | 66 | 66 | 66 | 66 | 66 | 66 | 66 | 66 | 66 |
| Water for rehydration | | 120 | 82 | 82 | 82 | 82 | 82 | 82 | 82 | 82 |
| Flavoring (A) | Onion powder | 12 | 12 | 12 | 12 | 12 | 12 | 12 | 12 | 12 |
| | Dark soy sauce | 12 | 12 | 12 | 12 | 12 | 12 | 12 | 12 | 12 |
| | Superfine sugar | 4 | 4 | 4 | 4 | 4 | 4 | 4 | 4 | 4 |
| | Yeast extract-2 | 3 | 3 | 3 | 3 | 3 | 3 | 3 | 3 | 3 |
| | Common salt | 0.8 | 0.8 | 0.8 | 0.8 | 0.8 | 0.8 | 0.8 | 0.8 | 0.8 |
| Emulsion curd (B) | | 150 | 150 | 150 | 150 | 150 | 150 | 150 | 150 | 150 |
| Processed oil and fat (C) | botanova (lard) | 32 | - | - | - | - | - | - | - | - |
| | Example 1 | - | 70 | - | - | - | - | - | - | - |
| | Example 13 | - | - | 70 | - | - | - | - | - | - |
| | Example 15 | - | - | - | 70 | - | - | - | - | - |
| | Example 21 | - | - | - | - | 70 | - | - | - | - |
| | Example 16 | - | - | - | - | - | 70 | - | - | - |
| | Example 17 | - | - | - | - | - | - | 70 | - | - |
| | Example 18 | - | - | - | - | - | - | - | 70 | - |
| | Example 19 | - | - | - | - | - | - | - | - | 70 |
| Total | | 400 | 400 | 400 | 400 | 400 | 228 | 228 | 228 | 228 |
| Lipid in Hamburg steak (%) | | 12% | 12% | 12% | 12% | 12% | 12% | 12% | 12% | 12% |

**[Table 9]**

| Prescription of soy meat Hamburg steak (Evaluation 4) | | | | | | | | |
|---|---|---|---|---|---|---|---|---|
| Unit of all: Part by weight | | | | | | | | |
| Raw material name | | Comparative Example 3 | Comparative Example 4 | Example 44 | Example 45 | Example 46 | Example 47 | Example 48 |
| Granular soy protein | | 66 | 66 | 66 | 66 | 66 | 66 | 66 |
| Water for rehydration | | 120 | 120 | 82 | 82 | 82 | 82 | 82 |
| Flavoring (A) | Onion powder | 12 | 12 | 12 | 12 | 12 | 12 | 12 |
| | Dark soy sauce | 12 | 12 | 12 | 12 | 12 | 12 | 12 |
| | Superfine sugar | 4 | 4 | 4 | 4 | 4 | 4 | 4 |
| | Yeast extract-2 | 3 | 3 | 3 | 3 | 3 | 3 | 3 |
| | Common salt | 0.8 | 0.8 | 0.8 | 0.8 | 0.8 | 0.8 | 0.8 |
| Emulsion curd (B) | | 150 | 150 | 150 | 150 | 150 | 150 | 150 |
| Processed oil and fat (C) | botanova (lard) | 32 | - | - | - | - | - | - |
| | botanova (beef) | - | 32 | - | - | - | - | - |
| | Example 23 | - | - | 70 | - | - | - | - |
| | Example 24 | - | - | - | 70 | - | - | - |
| | Example 26 | - | - | - | - | 70 | - | - |
| | Example 27 | - | - | - | - | - | 70 | - |
| | Example 28 | - | - | - | - | - | - | 70 |
| Total | | 400 | 400 | 400 | 400 | 400 | 400 | 400 |
| Lipid in Hamburg steak (%) | | 12% | 12% | 12% | 12% | 12% | 12% | 12% |

**[Table 10]**

| Prescription of soy meat Hamburg steak (Evaluation 5) | | | | | | | |
|---|---|---|---|---|---|---|---|
| Unit of all: Part by weight | | | | | | | |
| Raw material name | | Comparative Example 1 | Comparative Example 5 | Example 49 | Example 50 | Example 51 | Example 52 |
| Granular soy protein | | 66 | 66 | 66 | 66 | 66 | 66 |
| Water for rehydration | | 132 | 132 | 80 | 80 | 80 | 80 |
| Flavoring (A) | Onion powder | 12 | 12 | 12 | 12 | 12 | 12 |
| | Dark soy sauce | 12 | 12 | 12 | 12 | 12 | 12 |
| | Superfine sugar | 4 | 4 | 4 | 4 | 4 | 4 |
| | Yeast extract-2 | 3 | 3 | 3 | 3 | 3 | 3 |
| | Common salt | 0.8 | 0.8 | 0.8 | 0.8 | 0.8 | 0.8 |
| Emulsion curd (B) | | 150 | 150 | 150 | 150 | 150 | 150 |
| Processed oil and fat (C) | botanova (lard) | 20 | - | - | - | - | - |
| | botanova (beef) | - | 20 | - | - | - | - |
| | Example 29 | - | - | 73 | - | - | - |
| | Example 30 | - | - | - | 73 | - | - |
| | Example 5 | - | - | - | - | 73 | - |
| | Example 8 | - | - | - | - | - | 73 |
| Total | | 400 | 400 | 400 | 400 | 400 | 400 |
| Lipid in Hamburg steak (%) | | 9% | 9% | 9% | 9% | 9% | 9% |

**[Table 11]**

| Prescription of soy meat Hamburg steak (Evaluation 6) | | | | | | | | | |
|---|---|---|---|---|---|---|---|---|---|
| Unit of all: Part by weight | | | | | | | | | |
| Raw material name | | Comparative Example 3 | Example 65 | Example 66 | Example 67 | Example 68 | Example 69 | Comparative Example 14 | Comparative Example 15 |
| Granular soy protein | | 66 | 66 | 66 | 66 | 66 | 66 | 66 | 66 |
| Water for rehydration | | 120 | 82 | 82 | 107 | 82 | 82 | 82 | 82 |
| Flavoring (A) | Onion powder | 12 | 12 | 12 | 12 | 12 | 12 | 12 | 12 |
| | Dark soy sauce | 12 | 12 | 12 | 12 | 12 | 12 | 12 | 12 |
| | Superfine sugar | 4 | 4 | 4 | 4 | 4 | 4 | 4 | 4 |
| | Yeast extract-2 | 3 | 3 | 3 | 3 | 3 | 3 | 3 | 3 |
| | Common salt | 0.8 | 0.8 | 0.8 | 0.8 | 0.8 | 0.8 | 0.8 | 0.8 |
| Emulsion curd (B) | | 150 | 150 | 150 | 150 | 150 | 150 | 150 | 150 |
| Processed oil and fat (C) | botanova (lard) | 32 | - | - | - | - | - | - | - |
| | Example 53 | - | 70 | - | - | - | - | - | - |
| | Example 54 | - | - | 70 | - | - | - | - | - |
| | Example 58 | - | - | - | 45 | - | - | - | - |
| | Example 60 | - | - | - | - | 70 | - | - | - |
| | Example 62 | - | - | - | - | - | 70 | - | - |
| | Comparative Example 6 | - | - | - | - | - | - | 70 | - |
| | Comparative Example 13 | - | - | - | - | - | - | - | 70 |
| Total | | 400 | 400 | 400 | 400 | 400 | 400 | 400 | 400 |
| Lipid in Hamburg steak (%) | | 12% | 12% | 12% | 12% | 12% | 12% | 12% | 12% |

The following shows the raw materials used for textured soy protein Hamburg steak.

| Granular soy protein | "New Fujinic 43N" (FUJI OIL CO., LTD.) |
|---|---|
| Flavoring (A) | Onion powder (S&B FOODS INC.) |
| | Dark soy sauce "Kikkoman Dark Soy Sauce" (Kikkoman Corporation) |
| | Yeast extract-1 "Yeast Extract 21-TF" (Fuji Foods Corporation) |
| | Yeast extract-2 "Vegetable Bouillon" (SEIJO ISHII CO., LTD.) |
| Processed oil and fat (C) | botanova (lard) "botanova Lard Taste" (MIYOSHI OIL & FAT CO.,LTD.) |
| | "LS03" (Mitsubishi Chemical Group Corporation) |
| | botanova (beef) "botanova Beef Taste" (MIYOSHI OIL & FAT CO.,LTD.) |

### [Evaluation 1 Comparison with commercial oil and fat]

### (Examples 31 to 32 and Comparative Examples 1 to 2)

### <Evaluation of binding properties>

The cohesiveness of the hamburger patties inside the hamburger rings during shaping and the crumbly texture of the patties when cut with a knife during sensory evaluation after heating for eating were evaluated as follows.
×: Patty that does not retain its shape after shaping
△: Patty that retains its shape but crumble at the edges
○: Patty that retains its shape without crumbling

### <Evaluation of juiciness (sensory evaluation)>

The frozen soy meat Hamburg steak was boiled for 10 minutes to be evaluated. Upon the confirmation that the internal temperature was 70°C or more, the Hamburg steak was quartered to be evaluated. The internal temperature during the evaluation was 55 to 60°C. Panelists ate the Hamburg steak from the center, and evaluated the juiciness while chewing the Hamburg steak in the oral cavity. The juiciness was defined as "wetness or less crumbly texture during a chew".

Using Comparative Example 1 as a control, the evaluation was conducted as follows.
○: More juicy than the control
△: As juicy as the control
×: Less juicy

### <Evaluation of appearance>

The appearance color of meat juice-like drips overflowing from samples after heating was evaluated as follows for samples subjected to sensory evaluation.
O: Transparent or semitransparent drips associated with meat juice
×: White drips not associated with meat juice from meat of domestic animal

The following Table 12 shows the results of the evaluations.

**[Table 12]**

| Results of evaluation of soy meat Hamburg steak (Evaluation 1) | | | | | |
|---|---|---|---|---|---|
| Evaluation item | | Comparative Example 1 | Comparative Example 2 | Example 31 | Example 32 |
| Binding properties | During molding of kneaded mixture | △ | △ | ○ | ○ |
| Binding properties | During eating after heating | △ | △ | ○ | ○ |
| Juiciness | Five panelists | - | × | ○ | ○ |
| Appearance | | ○ | ○ | ○ | ○ |

Table 12 shows that while crumbly were the patties as the soy meat Hamburg steaks of Comparative Examples 1 and 2, containing commercial vegetable oil and fat as the processed oil and fat, the patties as the Hamburg steaks of Examples 31 to 32, containing the water-in-oil emulsion compositions, were wet and sticky, and exhibited satisfactory binding properties with the soy protein firmly bound to the emulsion curd. In the sensory evaluation, Examples 31 to 32 were juicier during chewing than Comparative Examples 1 and 2. Examples 31 to 32 also had satisfactory appearances.

### [Evaluation 2 Influence of concentration of water phase]

### (Examples 33 to 35 and Comparative Example 1)

### <Evaluation of binding properties>

The binding properties were evaluated in the same way as described in the above-mentioned "Evaluation 1 Comparison with commercial oil and fat".

### <Evaluation of juiciness (sensory evaluation)>

The juiciness evaluation (sensory evaluation) was performed in the same way as described in the above-mentioned "Evaluation 1 Comparison with commercial oil and fat". Comparative Example 1 was used as a control.

### <Evaluation of appearance>

The appearances were evaluated in the same way as described in the above-mentioned "Evaluation 1 Comparison with commercial oil and fat".

Table 13 shows the results of the evaluations.

**[Table 13]**

| Results of evaluation of soy meat Hamburg steak (Evaluation 2) | | | | | |
|---|---|---|---|---|---|
| Evaluation item | | Comparative Example 1 | Example 33 | Example 34 | Example 35 |
| Binding properties | During molding of kneaded mixture | △ | ○ | ○ | ○ |
| Binding properties | During eating after heating | △ | ○ | ○ | ○ |
| Juiciness | Four panelists | - | ○ | ○ | ○ |
| Appearance | | ○ | ○ | ○ | ○ |

Table 13 shows that the patties of Examples 33 to 35 were wet and sticky, and exhibited satisfactory binding properties. The patties were juicier than the patty containing commercial vegetable oil and fat, and also had satisfactory appearances. It is notable that even though the rate of the water phase increased, the patties maintained the juiciness derived from the oil and fat, and the use of the water-in-oil emulsion compositions that were lower in calorie enabled yielding the juiciness of the soy meat Hamburg steaks.

### [Evaluation 3 Influence of reduction in amount of emulsifier on demulsification]

### (Examples 36 to 39 and Comparative Example 3)

### <Evaluation of binding properties>

The binding properties were evaluated in the same way as described in the above-mentioned "Evaluation 1 Comparison with commercial oil and fat".

### <Evaluation of juiciness (sensory evaluation)>

The frozen soy meat Hamburg steak was boiled for 10 minutes to be evaluated. Upon the confirmation that the internal temperature was 70°C or more, the Hamburg steak was quartered to be evaluated. The internal temperature during the evaluation was 55 to 60°C. Four panelists ate the Hamburg steak from the center, and evaluated the juiciness while chewing the Hamburg steak in the oral cavity. The juiciness was defined as "wetness or less crumbly texture during a chew". In each test, a control was provided. The control was rated as 3 points. The Hamburg steak was evaluated on a five-point scale as follows:
Much juicier than control: +5
Juicier than control: +4
As juicy as control: +3
Less juicy than control: +2
Much less juicy than control: +1
The Hamburg steaks were evaluated in terms of juiciness as compared with Comparative Example 3 as the control based on the average score of the panelists as follows.
×: It was determined that the Hamburg steak rated as 3 or less was less juicy.
○: It was determined that the Hamburg steak rated as 3 or more was juicier.

### <Evaluation of appearance>

The appearances were evaluated in the same way as described in the above-mentioned "Evaluation 1 Comparison with commercial oil and fat".

Table 14 shows the results of the evaluations.

**[Table 14]**

| Results of evaluation of soy meat Hamburg steak (Evaluation 3) | | | | | | | | | | |
|---|---|---|---|---|---|---|---|---|---|---|
| Evaluation item | | Comparative Example 3 | Example 36 | Example 37 | Example 38 | Example 39 | Example 40 | Example 41 | Example 42 | Example 43 |
| Binding properties | During molding of kneaded mixture | △ | ○ | ○ | ○ | ○ | ○ | ○ | ○ | ○ |
| Binding properties | During eating after heating | △ | ○ | ○ | ○ | ○ | ○ | ○ | ○ | ○ |
| Juiciness | Four panelists | - | ○ | ○ | ○ | ○ | ○ | ○ | ○ | ○ |
| Appearance | | ○ | ○ | ○ | ○ | ○ | ○ | ○ | ○ | ○ |

Table 14 shows that even the use of the water-in-oil emulsion composition containing the emulsifiers at reduced concentrations improved the binding properties, and enhanced the juicinesses in Examples 36 to 43 as compared with the commercial vegetable oil and fat. The appearances were also satisfactory.

### [Evaluation 4 Influence of addition of flavorings to water phase on juiciness and flavor]

### (Examples 44 to 48 and Comparative Examples 3 to 4)

### <Evaluation of binding properties>

The binding properties were evaluated in the same way as described in the above-mentioned "Evaluation 1 Comparison with commercial oil and fat".

### <Evaluation of juiciness (sensory evaluation)>

The evaluation of juicinesses (sensory evaluation) was performed in the same way as described in the above-mentioned "Evaluation 3 Influence of reduction in amount of emulsifier on demulsification". Comparative Example 3 was used as a control.

### <Evaluation of appearance>

The appearances were evaluated in the same way as described in the above-mentioned "Evaluation 1 Comparison with commercial oil and fat".

Table 15 shows the results of the evaluations.

**[Table 15]**

| Results of evaluation of soy meat Hamburg steak (Evaluation 4) | | | | | | | | |
|---|---|---|---|---|---|---|---|---|
| Evaluation item | | Comparative Example 3 | Comparative Example 4 | Example 44 | Example 45 | Example 46 | Example 47 | Example 48 |
| Binding properties | During molding of kneaded mixture | △ | △ | ○ | ○ | ○ | ○ | ○ |
| Binding properties | During eating after heating | △ | △ | ○ | ○ | ○ | ○ | ○ |
| Juiciness | Four panelists | - | ○ | ○ | ○ | ○ | ○ | ○ |
| Appearance | | ○ | ○ | ○ | ○ | ○ | ○ | ○ |

Table 15 shows that Examples 44 to 48 had satisfactory binding properties and enhanced juicinesses, and the appearances were satisfactory. The use of flavorings such as yeast extract and rock salt having high enhancement capability in the water-in-oil emulsion compositions as Examples tended to impart cooking flavor and enhance meat-like juiciness. Although Comparative Example 4 was commercial vegetable oil and fat in which beef flavor was blended, Comparative Example 4 had enhanced juiciness, but had poor binding properties due to the crumbliness of the patty.

### [Evaluation 5 Influence of addition of flavoring to water phase contained in water-in-oil emulsion composition with increased water phase content on juiciness and flavor]

### (Examples 49 to 52 and Comparative Example 1)

### <Evaluation of binding properties>

The binding properties were evaluated in the same way as described in the above-mentioned "Evaluation 1 Comparison with commercial oil and fat".

### <Evaluation of juiciness (sensory evaluation)>

The evaluation of juicinesses (sensory evaluation) was performed in the same way as described in the above-mentioned "Evaluation 3 Influence of reduction in amount of emulsifier on demulsification". Comparative Example 1 was used as a control.

### <Evaluation of appearance>

The appearances were evaluated in the same way as described in the above-mentioned "Evaluation 1 Comparison with commercial oil and fat".

Table 16 shows the results of the evaluations.

**[Table 16]**

| Results of evaluation of soy meat Hamburg steak (Evaluation 5) | | | | | | | |
|---|---|---|---|---|---|---|---|
| Evaluation item | | Comparative Example 1 | Comparative Example 5 | Example 49 | Example 50 | Example 51 | Example 52 |
| Binding properties | During molding of kneaded mixture | △ | △ | ○ | ○ | ○ | ○ |
| Binding properties | During eating after heating | △ | △ | ○ | ○ | ○ | ○ |
| Juiciness | Four panelists | - | × | ○ | ○ | ○ | ○ |
| Appearance | | ○ | ○ | ○ | ○ | ○ | ○ |

Table 16 shows that Examples 49 to 52 had satisfactory binding properties and enhanced juicinesses. The appearances were also satisfactory. Comparative Example 5, the soy meat Hamburg steak of which contained lipid at a content of 9%, was less juicy and also poor in binding properties.

### [Evaluation 6 Influence of types of emulsifiers on demulsification]

### (Examples 65 to 69 and Comparative Examples 1, 14, and 15)

### <Evaluation of binding properties>

The binding properties were evaluated in the same way as described in the above-mentioned "Evaluation 1 Comparison with commercial oil and fat".

### <Evaluation of juiciness (sensory evaluation)>

The evaluation of juicinesses (sensory evaluation) was performed in the same way as described in the above-mentioned "Evaluation 3 Influence of reduction in amount of emulsifier on demulsification". Six panelists evaluated the juicinesses. Comparative Example 3 was used as a control.

Table 17 shows the results of the evaluations.

### <Evaluation of appearance>

The appearances were evaluated in the same way as described in the above-mentioned "Evaluation 1 Comparison with commercial oil and fat".

**[Table 17]**

| Results of evaluation of soy meat Hamburg steak (Evaluation 6) | | | | | | | | | |
|---|---|---|---|---|---|---|---|---|---|
| Evaluation item | | Comparative Example 3 | Example 65 | Example 66 | Example 67 | Example 68 | Example 69 | Comparative Example 14 | Comparative Example 15 |
| Binding properties | During molding of kneaded mixture | △ | ○ | ○ | ○ | ○ | ○ | ○ | ○ |
| Binding properties | During eating after heating | △ | ○ | ○ | ○ | ○ | ○ | ○ | ○ |
| Juiciness | Six panelists | - | ○ | ○ | ○ | ○ | ○ | ○ | △ |
| Appearance | | ○ | ○ | ○ | ○ | ○ | ○ | × | ○ |

Table 17 shows that the patties of Examples 65 to 69 were wet and sticky, exhibited satisfactory binding properties, were very juicy, and also had satisfactory appearances.

On the other hand, although Comparative Example 14, containing Comparative Example 6 as the water-in-oil emulsion composition containing only the emulsifier A, felt juicy like oil and fat, Comparative Example 14 had a poor appearance. Although Comparative Example 15, containing Comparative Example 13 as the water-in-oil emulsion composition containing only the emulsifier C, had a satisfactory appearance, Comparative Example 15 was as juicy as the control, and no effect was exercised. That is, excessive emulsification prevents the progress of demulsification, so that white drips peculiar to the emulsion ooze out during eating, which is not preferable. On the contrary, if the demulsification is excessive, the demulsification has already proceeded before the secondary heating before eating, so that the juiciness is deteriorated during the eating, which is not therefore preferable.

The above-mentioned results have confirmed that the use of the water-in-oil emulsion composition as Example of the present invention enables improving the binding properties of protein and imparting juiciness derived from the oil and fat, which are targets to be achieved for producing meat-like processed food containing vegetable protein.

The following tests confirmed compositions that enables improving the juiciness, the binding properties, and the appearance. Furthermore, the tests confirmed the binding properties after heating in the case of changing the thickener.

### <Preparation 2 of water-in-oil emulsion composition>

Water-in-oil emulsion compositions were prepared at blending ratios shown in Table 18 by the same method as described in the above-mentioned "Preparation 1 of water-in-oil emulsion composition".

### <Method for measuring viscosity of water phase>

The viscosity of the aqueous phase of the prepared water-in-oil emulsion composition was defined as the viscosity (mPa·s) measured at a shear rate of 100 (1/s), using a viscosity/viscoelasticity measuring apparatus (HAAKE RheoStress 6000), at 25°C, with a shear rate of 2 to 120 (1/s).

**[Table 18]**

| | | Example 70 | Example 71 | Example 72 | Example 73 | Example 74 | Comparative Example 16 | Comparative Example 17 | Example 75 | Example 76 |
|---|---|---|---|---|---|---|---|---|---|---|
| Purified palm oil | part by mass | 13.5 | 13.5 | 13.5 | 13.5 | 13.5 | 13.5 | 13.5 | 13.5 | 13.5 |
| Extremely hydrogenated soy oil | part by mass | 1.4 | 1.4 | 1.4 | 1.4 | 1.4 | 1.4 | 1.4 | 1.4 | 1.4 |
| Canola oil | part by mass | 30.2 | 30.2 | 30.2 | 30.2 | 30.0 | 30.0 | 30.0 | 30.0 | 30.0 |
| Polyglycerin-condensed ricinoleic acid ester-1 | part by mass | 0.40 | 0.40 | 0.40 | 0.40 | 0.40 | 1.00 | - | 0.40 | 0.40 |
| Glycerin monostearate ester | part by mass | 0.10 | 0.10 | 0.10 | 0.10 | 0.10 | - | 0.50 | 0.10 | 0.10 |
| Glycerin monooleate ester | part by mass | 0.20 | 0.20 | 0.20 | 0.20 | 0.20 | - | 0.20 | 0.20 | 0.20 |
| Sucrose erucate ester | part by mass | 0.10 | 0.10 | 0.10 | 0.10 | 0.10 | - | 0.10 | 0.10 | 0.10 |
| Crude salt | part by mass | 1.0 | 1.0 | 1.0 | 1.0 | 1.0 | 1.0 | 1.0 | 1.0 | 1.0 |
| Yeast extract | part by mass | - | - | - | - | 0.5 | 0.5 | 0.5 | 0.5 | 0.5 |
| Protein hydrolyzate | part by mass | - | - | - | - | 0.5 | 0.5 | 0.5 | 0.5 | 0.5 |
| Inulin | part by mass | 26.7 | - | - | - | - | - | - | - | - |
| Xanthan gum | part by mass | - | 0.3 | - | - | 0.3 | 0.3 | 0.3 | - | - |
| Guar gum | part by mass | - | - | 0.3 | - | - | - | - | - | - |
| Purified carrageenan | part by mass | - | - | - | 0.3 | - | - | - | - | - |
| Starch hydrolyzate | part by mass | - | - | - | - | - | - | - | 2.0 | 7.0 |
| Deionized water | part by mass | 26.7 | 52.9 | 52.9 | 52.9 | 52.1 | 52.1 | 52.1 | 50.4 | 45.4 |
| Percentage of oil phase | % by mass | 46 | 46 | 46 | 46 | 46 | 46 | 46 | 46 | 46 |
| Percentage of water phase | % by mass | 54 | 54 | 54 | 54 | 54 | 54 | 54 | 54 | 54 |
| Emulsifier A | % by mass | 0.4 | 0.4 | 0.4 | 0.4 | 0.4 | 1.0 | 0.0 | 0.4 | 0.4 |
| Emulsifier B + C | % by mass | 0.4 | 0.4 | 0.4 | 0.4 | 0.4 | 0.0 | 0.8 | 0.4 | 0.4 |
| A+B + C | % by mass | 0.8 | 0.8 | 0.8 | 0.8 | 0.8 | 1.0 | 0.8 | 0.8 | 0.8 |
| A / (B + C) | - | 1.0 | 1.0 | 1.0 | 1.0 | 1.0 | - | - | 1.0 | 1.0 |
| Viscosity of water phase | mPa·s | 149 | 61 | 98 | 17 | 61 | 61 | 61 | 1.2 | 2.4 |
| Gelation | | ○ | ○ | ○ | ○ | ○ | ○ | × | ○ | ○ |

The thickeners as the raw materials used for Examples 70 to 76 and Comparative Examples 16 and 17 are shown below.

| | |
|---|---|
| | Starch hydrolyzate "PINEDEX #2" (Matsutani Chemical Industry Co., Ltd.) |
| | Inulin "Fuji FF" (Fuji Nihon Corporation) |
| Thickener | Xanthan gum "Soaxan XG800" (Mitsubishi Chemical Group Corporation) |
| | Guar qum "SUPERGEL CSA200/50" (Sansho Co., Ltd.) |
| | Purified carrageenan "Soageena MV512" (Mitsubishi Chemical Group Corporation) |

The water-in-oil emulsion compositions shown in Examples 70 to 74 as the present invention exhibited no oil-water separation, demonstrated satisfactory gelling properties, and had a satisfactory particle size (a particle diameter of 30 µm or less). The water phases exhibited such viscosities of 10 to 150 mPa•s suitable for binding performance after heating. Although Examples 75 and 76 were gelled, the water phases had viscosities of 10 mPa•s or less, falling outside the viscosity range required for binding performance after heating.

On the other hand, the water-in-oil emulsion composition shown in Comparative Example 16 and containing only the emulsifier A exhibited no the oil-water separation, and demonstrated satisfactory gelling properties, while the water-in-oil emulsion composition shown in Comparative Example 17 and containing only the emulsifier B and the emulsifier C exhibited the oil-water separation, and did not demonstrate gelling properties.

The following test was performed involving adding the thus yielded water-in-oil emulsion compositions of Examples 70 to 76 and Comparative Example 16 to the following soy meat base material. The binding properties after the heating were evaluated.

### <Evaluation of binding properties after heating>

Water was mixed with granular soy protein (New Fujinic 43N, FUJI OIL CO., LTD.) at a ratio of 2:1, resulting in rehydration. Then, 80 g of the thus rehydrated soy meat base material was mixed with 20 g of each of the water-in-oil emulsion compositions of the present invention to yield a patty. A mold ring of 60 mm in diameter × 20 mm was charged with the patty, which was molded. The molded patty was heated with a microwave oven at 500 W for 1 minute to prepare a sample. The binding properties of the sample were evaluated in accordance with the following evaluation criteria.
× ··· The sample collapsed upon cutting with a knife, and further collapsed when pressed with a knife, resulting in a complete loss of height.
△ ··· The sample did not collapse upon cutting with a knife; however, it collapsed upon being pressed with a knife, resulting in a loss of height..
○ ··· Although slight collapse was observed upon cutting with a knife, the sample was resistant to collapse when pressed with a knife, maintaining its height.
⊚ ··· The sample was resistant to collapse upon cutting with a knife and did not collapse when pressed with a knife, maintaining its height.

Table 19 shows the results of the evaluation.

**[Table 19]**

| Results of Evaluation of binding properties after heating | | | | | | | | | |
|---|---|---|---|---|---|---|---|---|---|
| | Example 77 | Example 78 | Example 79 | Example 80 | Example 81 | Comparative Example 18 | Comparative Example 19 | Comparative Example 20 | Comparative Example 21 |
| Used water-in-oil emulsion | Example | Example 71 | Example 72 | Example 73 | Example 74 | Example 1 | Comparative Example 16 | Example 75 | Example 76 |
| Viscosity of water phase (mPa•s) | 149 | 61 | 98 | 17 | 61 | 0.8 | 61 | 1.2 | 2.4 |
| Evaluation of binding properties after heating | ⊚ | ⊚ | ⊚ | ○ | ⊚ | × | ⊚ | × | × |

Examples 77 to 81 have shown that the samples had satisfactory binding properties after the heating even though the different thickeners were contained in the water phases having viscosities in a certain range. On the other hand, Comparative Examples 18, 20, and 21, having a viscosity of less than 10 mPa•s, did not exhibit satisfactory binding properties after the heating. Although Comparative Example 19, containing the water-in-oil emulsion composition (Comparative Example 16) containing only the emulsifier A, exhibited satisfactory binding properties, white drips peculiar to emulsion oozed out during eating, so that the appearance was not preferable.

The above-mentioned results have shown that any of inulin, xanthan gum, guar gum, and purified carrageenan as the thickener can be incorporated into the water-in-oil emulsion composition containing the emulsifier A, and the emulsifier B and/or the emulsifier C to further improve the binding properties after the heating.

The following Reference Examples confirmed the binding properties after the heating in the cases of use of the water-in-oil emulsion compositions for an animal raw material and the vegetable raw material. The binding properties of the samples containing the vegetable raw material were evaluated in the same way as described in the above-mentioned <Evaluation of binding properties after heating>. The binding properties of the samples containing the animal raw material were evaluated in the same way except that a mixture of minced beef and pork was used instead of the rehydrated soy meat base material.

Table 20 shows that the results of the evaluation.

**[Table 20]**

| | | Example 82 | Comparative Example 22 | Comparative Example 23 | Comparative Example 24 |
|---|---|---|---|---|---|
| Used water-in-oil emulsion | | Example 74 | Example 75 | Example 76 | Example 60 |
| Viscosity of water phase (mPa•s) | | 61 | 1.2 | 2.4 | 0.9 |
| Evaluation of binding properties after heating | Animal raw material | ○ | ○ | ○ | ○ |
| | Vegetable raw material | ○ | × | × | × |

These results show that although the compositions containing starch hydrolyzate as the thickener enables sufficiently maintaining the binding properties in the sample containing the animal raw material after the heating, starch hydrolyzate has insufficient capability to maintain the binding properties of the samples containing the vegetable raw material after the heating.

## Claims

1. A water-in-oil emulsion composition for use in a meat substitute processed product comprising plant raw material, comprising:
an emulsifier A and
an emulsifier B and/or an emulsifier C,
wherein the emulsifier A is one or more emulsifiers selected from the group consisting of polyglycerin-condensed ricinoleic acid ester, glycerin fatty acid ester, sucrose fatty acid ester, and lecithin, the emulsifier A has an HLB of 9.0 or less,
the emulsifier B is fatty acid ester and has saturated fatty acid as constituent fatty acid, and
the emulsifier C is fatty acid ester and has only unsaturated fatty acid as constituent fatty acid.

2. The water-in-oil emulsion composition according to claim 1, wherein the emulsifier A is polyglycerin-condensed ricinoleic acid ester and/or lecithin.

3. The water-in-oil emulsion composition according to claim 1 or 2, wherein each of the emulsifier B and the emulsifier C is one or more emulsifiers selected from the group consisting of glycerin fatty acid ester, polyglycerin fatty acid ester, sucrose fatty acid ester, sorbitan fatty acid ester, propylene glycol fatty acid ester, organic acid monoglyceride, and polyoxyethylene sorbitan fatty acid ester.

4. The water-in-oil emulsion composition according to claim 1 or 2, wherein a content of the emulsifier A is 0.02 to 1% by mass, and a total content of the emulsifier B and/or the emulsifier C is 0.02 to 1% by mass.

5. The water-in-oil emulsion composition according to claim 1 or 2, wherein a ratio (mass ratio) of the content of the emulsifier A to the total content of the emulsifier B and/or the emulsifier C is 0.2 to 3.0.

6. The water-in-oil emulsion composition according to claim 1 or 2, wherein the ratio (mass ratio) of the content of the emulsifier A to the total content of the emulsifier B and/or the emulsifier C is 0.4 to 2.5.

7. The water-in-oil emulsion composition according to claim 1 or 2,
wherein a content of an oil phase is 10 to 70% by mass,
a content of a water phase is 90 to 30% by mass, and
the oil phase comprises the emulsifier A, and the emulsifier B and/or the emulsifier C.

8. The water-in-oil emulsion composition according to claim 1 or 2, wherein the water phase further comprises one or more ingredients selected from the group consisting of a thickener, a taste ingredient, and a flavoring ingredient.

9. The water-in-oil emulsion composition according to claim 8,
wherein the thickener is any of inulin, xanthan gum, guar gum, and carrageenan, and
the inulin is comprised at 0.3 to 72% by mass of the water-in-oil emulsion composition, or
the xanthan gum, the guar gum, and the carrageenan are comprised at 0.003 to 3.6% by mass of the water-in-oil emulsion composition.

10. The water-in-oil emulsion composition according to claim 8, wherein the thickener is any of inulin, xanthan gum, guar gum, and carrageenan, and
the inulin is comprised at 1 to 80% by mass of the water phase, or
the xanthan gum, the guar gum, and the carrageenan are comprised at 0.01 to 4.0% by mass of the water phase.

11. The water-in-oil emulsion composition according to claim 1 or 2, wherein viscosity of the water phase is 10 to 1000 mPa•s at 25°C.

12. A meat substitute processed product comprising the water-in-oil emulsion composition according to claim 1 or 2 and plant raw material.

13. The meat substitute processed product according to claim 12, comprising the water-in-oil emulsion composition at 2 to 30% by mass.

14. A method for producing a water-in-oil emulsion composition for use in a meat substitute processed product comprising plant raw material, comprising:
a step of mixing water, oil and fat, an emulsifier A, and an emulsifier B and/or an emulsifier C,
wherein the emulsifier A is one or more emulsifiers selected from the group consisting of polyglycerin-condensed ricinoleic acid ester, glycerin fatty acid ester, sucrose fatty acid ester, and lecithin, the emulsifier A has an HLB of 9.0 or less,
the emulsifier B is fatty acid ester and has saturated fatty acid as constituent fatty acid, and
the emulsifier C is fatty acid ester and has only unsaturated fatty acid as constituent fatty acid.

15. The production method according to claim 14, further comprising mixing one or more ingredients selected from the group consisting of a thickener, a taste ingredient, and a flavoring ingredient.

16. A meat substitute processed product comprising plant raw material, the processed product comprising the water-in-oil emulsion composition according to claim 1 or 2; vegetable protein; and a binder.
